(19) Europäisches Patentamt
European Patent Office
Office européen des brevets

(11) **EP 4 718 106 A1**

(12) **EUROPEAN PATENT APPLICATION**

(43) Date of publication:
**01.04.2026 Bulletin 2026/14**

(21) Application number: **25176618.4**

(22) Date of filing: **15.05.2025**

(51) International Patent Classification (IPC):
**G01S 5/00** (2006.01)    **G01S 5/02** (2010.01)
**G01S 5/14** (2006.01)

(52) Cooperative Patent Classification (CPC):
**G01S 5/019; G01S 5/0205; G01S 5/0284;
G01S 5/14;** G01S 2205/01

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.09.2024 CN 202411355298**

(71) Applicant: **Beijing Xiaomi Mobile Software Co.,
Ltd.
Beijing 100085 (CN)**

(72) Inventors:
• **TAO, Xiaoxuan
Beijing, 100085 (CN)**

• **QIAO, Guangjun
Beijing, 100085 (CN)**
• **LU, Zhongke
Beijing, 100085 (CN)**
• **XU, Shun
Beijing, 100085 (CN)**
• **GAO, Yufei
Beijing, 100085 (CN)**
• **CHEN, Hao
Beijing, 100085 (CN)**

(74) Representative: **Dehns Germany Partnerschaft
mbB
Theresienstraße 6-8
80333 München (DE)**

(54) **METHOD FOR POSITIONING VEHICLE KEY AND ELECTRONIC DEVICE**

(57) The present disclosure relates to a method for positioning a vehicle key, including: obtaining observation data of a vehicle, wherein the observation data includes observed respective distances between a plurality of anchor points on the vehicle and the vehicle key; determining a first position region of the vehicle key relative to the vehicle based on respective distances between two adjacent first anchor points of the plurality of anchor points and the vehicle key, and a predetermined distance between the two adjacent first anchor points; and determining a position coordinate of the vehicle key based on the first position region, the respective distances between the plurality of anchor points and the vehicle key, and a predetermined position of each anchor point on the vehicle.

Obtaining observation data of a vehicle, the observation data including observed respective distances between a plurality of anchor points on the vehicle and the vehicle key — S11

Determining a first position region of the vehicle key relative to the vehicle based on respective distances between two adjacent first anchor points of the plurality of anchor points and the vehicle key, and a predetermined distance between the two adjacent first anchor points — S12

Determining a position coordinate of the vehicle key based on the first position region, the respective distances between the plurality of anchor points and the vehicle key, and a predetermined position of each anchor point on the vehicle — S13

FIG. 1

EP 4 718 106 A1

**Description**

**TECHNICAL FIELD**

The present disclosure relates to the field of vehicle control technology, and in particular, to a method and device for positioning a vehicle key, an electronic device, a storage medium and a program product.

**BACKGROUND**

With the development of automobile intellectualization, the wireless communication technologies based on Ultra-Wideband (UWB), Bluetooth Low Energy (BLE), Near Field Communication (NFC) and the like are widely used in digital vehicle keys to provide users with a safe and convenient vehicle access experience. For example, a door of a vehicle may be automatically opened when a user gets close to the vehicle, and the door may be automatically locked when the user goes away from the vehicle without taking out his/her mobile phone. However, there is a problem of inaccurate positioning of the vehicle key in the related art.

**SUMMARY**

In order to overcome the problem in the related art, the present disclosure provides a method and device for positioning a vehicle key, an electronic device, a storage medium and a program product.

A first aspect of embodiments of the present disclosure provides a method for positioning a vehicle key, including:

obtaining observation data of a vehicle, wherein the observation data includes observed respective distances between a plurality of anchor points on the vehicle and the vehicle key;

determining a first position region of the vehicle key relative to the vehicle based on respective distances between two adjacent first anchor points of the plurality of anchor points and the vehicle key, and a predetermined distance between the two adjacent first anchor points; and

determining a position coordinate of the vehicle key based on the first position region, the respective distances between the plurality of anchor points and the vehicle key, and a predetermined position of each anchor point on the vehicle.

In some embodiments, determining the position coordinate of the vehicle key based on the first position region, the respective distances between the plurality of anchor points and the vehicle key, and the predetermined position of each anchor point on the vehicle, includes:

estimating a position coordinate of the vehicle key relative to the vehicle based on the respective distances between the plurality of anchor points and the vehicle key, and the predetermined position of each anchor point on the vehicle;

determining a second position region of the vehicle key relative to the vehicle based on the estimated position coordinate of the vehicle key relative to the vehicle; and

determining the estimated position coordinate of the vehicle key relative to the vehicle as the position coordinate of the vehicle key in response to the second position region coinciding with the first position region.

In some embodiments, determining the position coordinate of the vehicle key based on the first position region, the respective distances between the plurality of anchor points and the vehicle key, and the predetermined position of each anchor point on the vehicle, includes:

determining a plurality of target anchor points for calculating the position coordinate based on a number of the plurality of anchor points and the first position region; and

determining the position coordinate of the vehicle key based on respective distances between the plurality of target anchor points and the vehicle key, and a predetermined position of each target anchor point on the vehicle.

In some embodiments, determining the plurality of target anchor points for calculating the position coordinate based on the number of the plurality of anchor points and the first position region, includes:

determining, in response to the number of the plurality of anchor points being greater than a first predetermined number threshold, an anchor point of the plurality of anchor points that is located within the first position region as the target anchor point; and

determining, in response to the number of the plurality of anchor points being less than or equal to the first predetermined number threshold, the plurality of anchor points as the plurality of target anchor points.

In some embodiments, the method further includes:

determining an initial predicted coordinate of the vehicle key, and

determining the position coordinate of the vehicle key based on the respective distances between the plurality of target anchor points and the vehicle key, and the predetermined position of each target anchor point on the vehicle, includes: iteratively determining the position coordinate of the vehicle key based on the initial predicted coordinate, the respective distances between the plurality of target anchor points and the vehicle key, and the predetermined position of each target anchor point on the vehicle.

In some embodiments, determining the initial predicted coordinate of the vehicle key includes:

determining, in response to a number of the plurality of anchor points being greater than a second predetermined number threshold, the initial predicted coordinate of the vehicle key based on the respective distances between the plurality of anchor points and the vehicle key, and the predetermined position of each anchor point on the vehicle by using a fitting method; and

determining, in response to the number of the plurality of anchor points being less than or equal to the second predetermined number threshold, the initial predicted coordinate of the vehicle key based on respective distances between two adjacent second anchor points and the vehicle key, a predetermined distance between the two adjacent second anchor points, and the first position region.

In some embodiments, determining, in response to the number of the plurality of anchor points being greater than the second predetermined number threshold, the initial predicted coordinate of the vehicle key based on the respective distances between the plurality of anchor points and the vehicle key, and the predetermined position of each anchor point on the vehicle by using the fitting method, includes:

determining, in response to the number of the plurality of anchor points being greater than the second predetermined number threshold, a linear fitting coordinate of the vehicle key based on the respective distances between the plurality of anchor points and the vehicle key, and the predetermined position of each anchor point on the vehicle by using a linear fitting method; and

determining the initial predicted coordinate of the vehicle key by performing non-linear iteration based on the linear fitting coordinate, the respective distances between the plurality of anchor points and the vehicle key, and the predetermined position of each anchor point on the vehicle.

In some embodiments, determining the initial predicted coordinate of the vehicle key by performing the non-linear iteration based on the linear fitting coordinate, the respective distances between the plurality of anchor points and the vehicle key, and the predetermined position of each anchor point on the vehicle, includes:

in response to a predetermined first convergence condition being satisfied when performing the non-linear iteration based on the linear fitting coordinate, the respective distances between the plurality of anchor points and the vehicle key, and the predetermined position of each anchor point on the vehicle, using a coordinate when the first convergence condition is satisfied as the initial predicted coordinate of the vehicle key; and

in response to the first convergence condition being not satisfied when performing the non-linear iteration based on the linear fitting coordinate, the respective distances between the plurality of anchor points and the vehicle key, and the predetermined position of each anchor point on the vehicle, using the linear fitting coordinate as the initial predicted coordinate of the vehicle key.

In some embodiments, iteratively determining the position coordinate of the vehicle key based on the initial predicted coordinate, the respective distances between the plurality of target anchor points and the vehicle key, and the predetermined position of each target anchor point on the vehicle, includes:

in response to the number of the plurality of anchor points being greater than the second predetermined number threshold, and a predetermined second convergence condition being satisfied when iteratively determining the position coordinate of the vehicle key based on the initial predicted coordinate, the respective distances between the plurality of target anchor points and the vehicle key, and the predetermined position of each target anchor point on the vehicle, using a position coordinate when the second convergence condition is satisfied as the position coordinate of the vehicle key; and

in response to the number of the plurality of anchor points being greater than the second predetermined number threshold, and the second convergence condition being not satisfied when iteratively determining the position coordinate of the vehicle key based on the initial predicted coordinate, the respective distances between the plurality of target anchor points and the vehicle key, and the predetermined position of each target anchor point on the vehicle, iteratively determining the position coordinate of the vehicle key based on a predetermined distance between two anchor points of the plurality of target anchor points and respective distances between the two anchor points and the vehicle key, wherein the respective distances between the two anchor points and the vehicle key are less than a first predetermined distance threshold.

In some embodiments, the two adjacent first anchor points are anchor points, that are adjacent in position and each has a distance from the vehicle key less than a second predetermined distance threshold, of the plurality of anchor points.

A second aspect of embodiments of the present disclosure provides a device for positioning a vehicle key, including:

an obtaining module, configured to obtain observation data of a vehicle, wherein the observation data includes observed respective distances between a plurality of anchor points on the vehicle and the vehicle key;

a first determining module, configured to determine a first position region of the vehicle key relative to the vehicle based on respective distances between two adjacent first anchor points of the plurality of anchor points and the vehicle key, and a predetermined distance between the two adjacent first anchor points; and

a second determining module, configured to determine a position coordinate of the vehicle key based on the first position region, the respective distances between the plurality of anchor points and the vehicle key, and a predetermined position of each anchor point on the vehicle.

In some embodiments, the second determining module is further configured to:

estimate a position coordinate of the vehicle key relative to the vehicle based on the respective distances between the plurality of anchor points and the vehicle key, and the predetermined position of each anchor point on the vehicle;

determine a second position region of the vehicle key relative to the vehicle based on the estimated position coordinate of the vehicle key relative to the vehicle; and

determine the estimated position coordinate of the vehicle key relative to the vehicle as the position coordinate of the vehicle key in response to the second position region coinciding with the first position region.

In some embodiments, the second determining module is further configured to:

determine a plurality of target anchor points for calculating the position coordinate based on a number of the plurality of anchor points and the first position region; and

determine the position coordinate of the vehicle key based on respective distances between the plurality of target anchor points and the vehicle key, and a predetermined position of each target anchor point on the vehicle.

In some embodiments, the second determining module is further configured to:

determine, in response to the number of the plurality of anchor points being greater than a first predetermined number threshold, an anchor point of the plurality of anchor points that is located within the first position region as the target anchor point; and

determine, in response to the number of the plurality of anchor points being less than or equal to the first predetermined number threshold, the plurality of anchor points as the plurality of target anchor points.

In some embodiments, the device further includes:

a third determining module configured to determine an initial predicted coordinate of the vehicle key, and
the second determining module is further configured to:
iteratively determine the position coordinate of the vehicle key based on the initial predicted coordinate, the respective distances between the plurality of target anchor points and the vehicle key, and the predetermined position of each target anchor point on the vehicle.

In some embodiments, the third determining module is further configured to:

determine, in response to a number of the plurality of anchor points being greater than a second predetermined number threshold, the initial predicted coordinate of the vehicle key based on the respective distances between the plurality of anchor points and the vehicle key, and the predetermined position of each anchor point on the vehicle by using a fitting method;

determine, in response to the number of the plurality of anchor points being less than or equal to the second predetermined number threshold, the initial predicted coordinate of the vehicle key based on respective distances between two adjacent second anchor points and the vehicle key, a predetermined distance between the two adjacent second anchor points, and the first position region.

In some embodiments, the third determining module is further configured to:

determine, in response to the number of the plurality of anchor points being greater than the second predetermined number threshold, a linear fitting coordinate of the vehicle key based on the respective distances between the plurality of anchor points and the vehicle key, and the predetermined position of each anchor point on the vehicle by using a linear fitting method; and
determine the initial predicted coordinate of the vehicle key by performing non-linear iteration based on the linear fitting coordinate, the respective distances between the plurality of anchor points and the vehicle key, and the predetermined position of each anchor point on the vehicle.

In some embodiments, the third determining module is further configured to:

in response to a predetermined first convergence condition being satisfied when performing the non-linear iteration based on the linear fitting coordinate, the respective distances between the plurality of anchor points and the vehicle key, and the predetermined position of each anchor point on the vehicle, use a coordinate when the first convergence condition is satisfied as the initial predicted coordinate of the vehicle key; and
in response to the first convergence condition being not satisfied when performing the non-linear iteration based on the linear fitting coordinate, the respective distances between the plurality of anchor points and the vehicle key, and the predetermined position of each anchor point on the vehicle, use the linear fitting coordinate as the initial predicted coordinate of the vehicle key.

In some embodiments, the second determining module is further configured to:

in response to the number of the plurality of anchor points being greater than the second predetermined number threshold, and a predetermined second convergence condition being satisfied when iteratively determining the position coordinate of the vehicle key based on the initial predicted coordinate, the respective distances between the plurality of target anchor points and the vehicle key, and the predetermined position of each target anchor point on the vehicle, use a position coordinate when the second convergence condition is satisfied as the position coordinate of the vehicle key; and
in response to the number of the plurality of anchor points being greater than the second predetermined number threshold, and the second convergence condition being not satisfied when iteratively determining the position coordinate of the vehicle key based on the initial predicted coordinate, the respective distances between the plurality of target anchor points and the vehicle key, and the predetermined position of each target anchor point on the vehicle, iteratively determine the position coordinate of the vehicle key based on a predetermined distance between two anchor points of the plurality of target anchor points and respective distances between the two anchor points and the vehicle key, wherein the respective distances between the two anchor points and the vehicle key are less than a first predetermined distance threshold.

In some embodiments, the two adjacent first anchor points are anchor points, that are adjacent in position and each has a distance from the vehicle key less than a second predetermined distance threshold, of the plurality of anchor points.

A third aspect of the embodiments of the present disclosure provides an electronic device, including:

a processor; and
a memory having a computer program or instruction stored thereon,
wherein the processor executes the computer program or instruction to implement steps of any method according the first aspect.

A fourth aspect of the embodiments of the present disclosure provides a non-transitory computer-readable storage medium having a computer program or instruction stored thereon that, when being executed by a processor, implements steps of any method according to the first aspect.

A fifth aspect of the embodiments of the present disclosure provides a computer program product comprising a computer program or instruction that, when being executed by a processor, implements steps of any method according to the first aspect.

It is to be understood that the above general description and the detailed descriptions that follow are exemplary and explanatory only and do not limit the present disclosure.

**BRIEF DESCRIPTION OF THE DRAWINGS**

The accompanying drawings herein, which are incorporated into and form a part of the specification, illustrate embodiments consistent with the present disclosure and are used in conjunction with the specification to explain the principle of the present disclosure.

FIG. 1 is a flowchart of a method for positioning a vehicle key according to an embodiment.
FIG. 2 is a diagram of an anchor point arrangement and a region division on a vehicle in an embodiment of the present disclosure.
FIG. 3 is a flowchart of a method for positioning a vehicle key in an embodiment of the present disclosure.
FIG. 4 is a flowchart of a process for estimating a position coordinate of a vehicle key relative to a vehicle in an embodiment of the present disclosure.
FIG. 5 is a diagram of a device for positioning a vehicle key according to an embodiment.
FIG. 6 is a block diagram of a structure of an electronic device in an embodiment of the present disclosure.

**DETAILED DESCRIPTION**

Embodiments will be described herein in detail, examples of which are represented in the accompanying drawings. When the following description relates to the accompanying drawings, the same numerals in the different accompanying drawings indicate the same or similar elements unless otherwise indicated. The implementations described in the following embodiments do not represent all embodiments consistent with the present disclosure. Rather, they are only examples of devices and methods consistent with some aspects of the present disclosure as detailed in the appended claims.

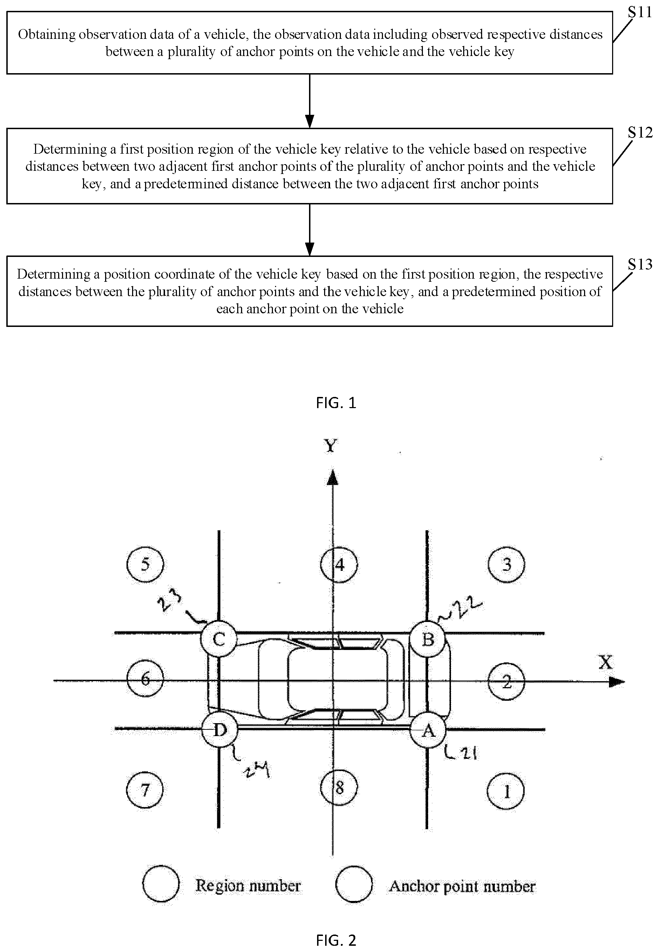

FIG. 1 is a flowchart of a method for positioning a vehicle key according to an embodiment. As shown in FIG. 1, the method includes:

S11, obtaining observation data of a vehicle, wherein the observation data includes observed respective distances between a plurality of anchor points on the vehicle and the vehicle key;

S12, determining a first position region of the vehicle key relative to the vehicle based on respective distances between two adjacent first anchor points of the plurality of anchor points and the vehicle key, and a predetermined distance between the two adjacent first anchor points; and

S13, determining a position coordinate of the vehicle key based on the first position region, the respective distances between the plurality of anchor points and the vehicle key, and a predetermined position of each anchor point on the vehicle.

In an embodiment of the present disclosure, the method for positioning a vehicle key may be applied in an electronic device, which is for example a physical vehicle key, or a user terminal such as a mobile phone, a tablet, and a wearable device. The electronic device may obtain the observation data of the vehicle based on communication with the vehicle and further determine the position coordinate of the vehicle key. The vehicle key may be a physical vehicle key, or a digital vehicle key in a user terminal such as a mobile phone, a tablet, and a wearable device.

In an embodiment of the present disclosure, the electronic device may also be a server device having a communication connection with a user terminal. The server device may, for example, determine the position coordinate of the vehicle key after obtaining the observation data of the vehicle from the user terminal. The server may directly control the vehicle based on the position coordinate of the vehicle key, or may send the position coordinate of the vehicle key to the user terminal so that the user terminal controls the vehicle.

In an embodiment of the present disclosure, the electronic device may also be a vehicle, and the vehicle determines the position coordinate of the vehicle key after obtaining the observation data based on a positioning anchor point arranged on the vehicle, and controls the vehicle based on the position coordinate through a controller within the vehicle.

In an embodiment of the present disclosure, the electronic device may provide refined control of the vehicle based on the position coordinate. For example, the vehicle door may be controlled to open or close automatically based on a change trend of the position coordinate; or when the position coordinate of the vehicle key characterizes that the vehicle key is located at the rear of the vehicle and is close to the vehicle, the trunk is controlled to open; or when the position coordinate of the vehicle key characterizes that the vehicle key is located at the right side of the vehicle and is close to the vehicle, the vehicle window on the right side may be controlled to open, and so on. The manner of controlling the vehicle based on the position coordinate of the vehicle key is not limited in the embodiments of the present disclosure.

In step S11, the electronic device obtains observation data of the vehicle, which observation data includes observed respective distances between a plurality of anchor points on the vehicle and the vehicle key. In an embodiment of the present disclosure, the observed distance between the anchor point and the vehicle key is referred to as a measured distance value of the anchor point. It is to be noted that in an embodiment of the present disclosure, a plurality of anchor points may be provided on the vehicle, and arranged at different positions of the vehicle body, for example, the anchor points may be provided at four corners of the vehicle, or four or more anchor points may be provided at four sides of the vehicle such as the front, the rear, the left, and the right of the vehicle, which is not limited in the embodiments of the present disclosure.

In an embodiment of the present disclosure, the distance between the anchor point on the vehicle and the vehicle key in the observation data is substantially the distance between the anchor point and the physical vehicle key or the user terminal carrying the digital vehicle key. Taking the user terminal carrying the digital vehicle key as an example, each anchor point on the vehicle and the user terminal may communicate with each other based on BLE or NFC, and then the distance between the anchor point and the user terminal is determined based on the received signal strength indication (RSSI); or each anchor point on the vehicle and the user terminal may communicate with each other based on UWB, and the distance between the anchor point and the user terminal is determine based on a time difference between transmission and reception of the UWB signal.

It is to be noted that in an embodiment of the present disclosure, the respective distances between a plurality of anchor points on the vehicle and the vehicle key observed by the electronic device may be the distances between some of the anchor points on the vehicle and the vehicle key, or may be the distances between all of the anchor points on the vehicle and the vehicle key. In addition, if the observation data obtained by the electronic device for a predetermined time period includes only the distance between one anchor point and the vehicle key, the electronic device may incorporate the observation data for an adjacent historical time period to obtain the distances between the plurality of anchor points and the vehicle key, or the electronic device may obtain the respective distances between the plurality of anchor points and the vehicle key based on a plurality of communication methods.

In an embodiment of the present disclosure, the electronic device may directly perform subsequent steps based on the observed respective distances between the plurality of anchor points and the vehicle key, or may also perform smoothing on the observed data to exclude some possible abnormal data. For example, the electronic device may filter the data with the distance value being significantly too large or too small among the observed respective distances between the plurality of anchor points and the vehicle key. The abnormal data may be caused by signal interference or anchor point anomaly.

In step S12, the electronic device determines a first position region of the vehicle key relative to the vehicle based on respective distances between two adjacent first anchor points of the plurality of anchor points and the vehicle key and a predetermined distance between the two adjacent first anchor points. The predetermined distance between the two adjacent first anchor points may be data stored in the vehicle beforehand, or data obtained from the vehicle by the user terminal, or data stored in the user terminal beforehand, which is not limited in the embodiments of the present disclosure.

In an embodiment of the present disclosure, the respective distances between the two adjacent first anchor points and the vehicle key and the predetermined distances between the two adjacent first anchor points may form a triangle with distances as the side lengths, and the electronic device may determine the first position region of the vehicle key relative to the vehicle based on the shape of the triangle.

In some embodiments of the present disclosure, the two adjacent first anchor points may be any two adjacent anchor points of the plurality of anchor points; and in some other embodiments, the two adjacent first anchor points are anchor points of the plurality of anchor points that are positioned adjacent to each other and each has a distance to the vehicle key less than a second predetermined distance threshold. For example, the two adjacent first anchor points are two anchor points having the shortest distances to the vehicle key (i.e., the two adjacent anchor points having the shortest measured distance), in which the shortest distances may mean that the two adjacent first anchor points have the smallest average distance; or may mean that the distances of the two adjacent first anchor points are the most highly ranked among the distances corresponding to the plurality of anchor points based on the ascending order of the distances.

FIG. 2 is a diagram of an anchor point arrangement and a region division on a vehicle in an embodiment of the present disclosure. As shown in FIG. 2, four anchor points A, B, C, and D (21, 22, 23, 24) are arranged at four corners of the vehicle, and the periphery of the vehicle is divided into eight regions, and the first position region may be one of the regions. In the case of the anchor point arrangement in FIG. 2, theoretically, at most three anchor points outside the vehicle may be detected in regions 1, 3, 5, and 7, and at most two anchor points outside the vehicle may be detected in regions 2, 4, 6, and 8. However, due to the influence of signal reflection, the actual situation may also be inconsistent with the theoretical situation. For example, the measured distance value of the anchor point A may also be detected in the region 5 due to the signal reflection.

On the basis of the above FIG. 2, for example, the anchor point B 22 and the anchor point C 23 are the two adjacent first anchor points, and the respective distances between the vehicle key and the anchor points B and C and the distance between the anchor points B and C form a triangle. When the triangle is an acute triangle, it means that the vehicle key is located in region 4; when the triangle is an obtuse triangle and the anchor point with the shortest measured distance is the anchor point C, the vehicle key is located in region 5; and when the triangle is an obtuse triangle and the anchor point with the shortest measured distance is the anchor point B, the vehicle key is located in region 3.

In an embodiment of the present disclosure, since the two shortest measured distance values are often considered to be the least affected by external influences, determining the first position region of the vehicle key relative to the vehicle based on the two adjacent anchor points with the measured distance values less than the second predetermined distance threshold may improve the accuracy of the determination of the first position region.

In step S13, the electronic device determines a position coordinate of the vehicle key based on the first position region, the respective distances between the plurality of anchor points and the vehicle key, and a predetermined position of each anchor point on the vehicle. The predetermined position of the anchor point on the vehicle includes a coordinate value of the anchor point on the vehicle, such as the coordinate values on the X-axis and the Y-axis as shown in FIG. 2, and may also include a height of the anchor point relative to the ground. It is to be noted that in an embodiment of the present disclosure, the arranged heights of the respective anchor points may be the same.

In an embodiment of the present disclosure, the position coordinate of the vehicle key may be the position coordinate of the vehicle key relative to the vehicle. For example, as for the coordinate system in FIG. 2, the position coordinate of the vehicle key is the coordinate under such coordinate system. Of course, the position coordinate of the vehicle key may also the be coordinate under the world coordinate system.

In an embodiment of the present disclosure, when the electronic device determines the position coordinate of the vehicle key, in some embodiments, the electronic device may determine the position coordinate of the vehicle key after filtering the plurality of anchor points based on the first position region; and in other embodiments, the electronic device may determine whether the position coordinate of the vehicle key is reasonable based on the first position region.

Further, in some embodiments, the electronic device may determine the position coordinate of the vehicle key in a data fitting manner based on the respective distances between the plurality of anchor points and the vehicle key, and the predetermined position of each anchor point on the vehicle. In some other embodiments, the electronic device may may also determine the position coordinate of the vehicle key based on the first position region, the respective distances between the plurality of anchor points and the vehicle key and the predetermined position of each anchor point on the vehicle by using a trained model, and the model may be trained based on a deep learning network. For example, the model is obtained after training and hyperparameter tuning of a network such as a convolutional neural network (CNN) or a deep neural network (DNN) based on a plurality of training sample data and a label value corresponding to the training sample data, in which the label value is a predetermined position coordinate, and the training sample data is a sample position region, a sample distance between the anchor point and the vehicle key, and a predetermined position of the anchor point on the vehicle.

The manner of determining the position coordinate of the vehicle key and the reference coordinate system of the position coordinate are not limited in the embodiments of the present disclosure.

It is to be understood that in the embodiment of the present disclosure, the electronic device first determines the first position region of the vehicle key relative to the vehicle, and then determines the position coordinate of the vehicle key based on the first position region and the information of the plurality of anchor points. As the first position region may provide a region reference, the accuracy of determining the position coordinate of the vehicle key may be improved on the basis of the region reference.

In some embodiments, determining the position coordinate of the vehicle key based on the first position region, the respective distances between the plurality of anchor points and the vehicle key, and the predetermined position of each anchor point on the vehicle, includes:

estimating a position coordinate of the vehicle key relative to the vehicle based on the respective distances between the plurality of anchor points and the vehicle key, and the predetermined position of each anchor point on the vehicle; and

determining a second position region of the vehicle key relative to the vehicle based on the estimated position coordinate of the vehicle key relative to the vehicle; and

determining the estimated position coordinate of the vehicle key relative to the vehicle as the position coordinate of the vehicle key in response to the second position region coinciding with the first position region.

In an embodiment of the present disclosure, the electronic device may estimate the position coordinate of the vehicle key relative to the vehicle based on the distance between each anchor point and the vehicle key and the predetermined position of each anchor point on the vehicle by using the aforementioned data fitting manner, which is for example one or more fitting methods such as least-squares fitting, polynomial fitting, and Gaussian-Newton (G-N) method. The electronic device may also estimate the position coordinate of the vehicle key relative to the vehicle based on the respective distances between the plurality of anchor points and the vehicle key and the predetermined position of each anchor point on the vehicle by using a trained model. The manner of the electronic device estimating the position coordinate of the vehicle key relative to the vehicle based on the respective distances between the plurality of anchor points and the vehicle key and the predetermined position of each anchor point on the vehicle may refer to the manner of determining the position coordinate of the vehicle key based on the plurality of target anchor points described below.

In an embodiment of the present disclosure, after obtaining the position coordinate of the vehicle key relative to the vehicle, the electronic device may determine the second position region of the vehicle key relative to the vehicle based on this position coordinate, and determine the estimated position coordinate of the vehicle key relative to the vehicle as the position coordinate of the vehicle key in a case where the second position region coincides with the first position region. The second position region may be any of the 8 regions as shown in the aforementioned FIG. 2.

In the embodiment of the present disclosure, the electronic device estimates the position coordinate of the vehicle key relative to the vehicle based on the observed distance between each anchor point and the vehicle key and the predetermined position of each anchor point on the vehicle, then determines the second position region of the vehicle key relative to the vehicle, and then determines the estimated position coordinate of the vehicle key relative to the vehicle as the position coordinate of the vehicle key in a case where the second position region coincides with the first position region. By this manner of using the first position region to verify the accuracy of the position coordinate, the accuracy of determining the position coordinate of the vehicle key may be improved.

In some embodiments, determining the position coordinate of the vehicle key based on the first position region, the respective distances between the plurality of anchor points and the vehicle key, and the predetermined position of each anchor point on the vehicle, includes:

determining a plurality of target anchor points for calculating the position coordinate based on a number of the plurality of anchor points and the first position region; and
determining the position coordinate of the vehicle key based on respective distances between the plurality of target anchor points and the vehicle key, and a predetermined position of each target anchor point on the vehicle.

As described above, the first position region may also be used to filter the observed plurality of anchor points. In an embodiment of the present disclosure, the electronic device may filter out the plurality of target anchor points in conjunction with the number of observed anchor points to determine the position coordinate of the vehicle key based on the information of the target anchor points.

In an embodiment of the present disclosure, the position coordinate of the vehicle key may be the position coordinate of the vehicle key relative to the vehicle; and the aforementioned manner of estimating the position coordinate of the vehicle key relative to the vehicle based on the respective distances between the plurality of anchor points and the vehicle key and the predetermined position of each anchor point on the vehicle may refer to the manner of filtering out the plurality of target anchor points based on the first position region and determining the position coordinate of the vehicle key based on the target anchor point. For example, in some embodiments, estimating the position coordinate of the vehicle key relative to the vehicle based on the respective distances between the plurality of anchor points and the vehicle key and the predetermined position of each anchor point on the vehicle, includes:

determining a plurality of target anchor points for calculating the position coordinate based on a number of the plurality of anchor points and the first position region; and
determining the position coordinate of the vehicle key based on respective distances between the plurality of target anchor points and the vehicle key, and a predetermined position of each target anchor point on the vehicle.

In addition, the manner of estimating the position coordinate of the vehicle key relative to the vehicle based on the respective distances between the plurality of anchor points and the vehicle key and the predetermined position of each anchor point on the vehicle may also be the manner of determining the position coordinate of the vehicle key directly with reference to the target anchor point without filtering out the target anchor point from the plurality of anchor points, which is not limited in the embodiments of the present disclosure.

It is to be noted that in an embodiment of the present disclosure, after the electronic device determines the target anchor point based on the first position region and determines the position coordinate of the vehicle key based on the target anchor point, the electronic device may also determine the second position region of the vehicle key relative to the vehicle based on the position coordinate, and take the position coordinate of the vehicle key determined based on the target anchor point as the position coordinate of the vehicle key in a case where the second position region coincides with the first position region.

In some embodiments, determining the plurality of target anchor points for calculating the position coordinate based on the number of the plurality of anchor points and the first position region, includes:

determining, in response to the number of the plurality of anchor points being greater than a first predetermined number threshold, an anchor point of the plurality of anchor points that is located within the first position region as the target anchor point; and

determining, in response to the number of the plurality of anchor points being less than or equal to the first predetermined number threshold, the plurality of anchor points as the plurality of target anchor points.

In an embodiment of the present disclosure, the predetermined number threshold may be 2 or other values less than the total number of anchor points on the vehicle, which is not limited in the embodiments of the present disclosure.

Theoretically, the accuracy of the position coordinate determined based on the anchor point in the region where the vehicle key is located may be high, which however is usually affected by signal reflection and the like, and there may be a noise value in the obtained observation data. For example, in FIG. 2, the area 5 and the anchor point A are respectively located in the right front of the co-pilot position of the vehicle and the left rear of the driver side of the vehicle, and are separated by the entire vehicle body in the middle therebetween, which is a non-visual situation. Theoretically, when the key is located in the area 5, the measured distance value of the anchor point A may not be received, but due to the signal reflection, the measured distance value of the anchor point A may be received in the area 5.

In this regard, the electronic device determines the anchor point of the plurality of anchor points which is located in the first position region as the target anchor point when the number of the plurality of anchor points is greater than a predetermined number threshold, i.e., when the number of anchor points is large; and directly determines the plurality of anchor points as the plurality of target anchor points when the number of the plurality of anchor points is less than or equal to the predetermined number threshold, i.e., when the number of the anchor points is not large.

It is to be understood that the manner of determining, in a targeted manner, the target anchor point for calculating the position coordinate based on the number of the plurality of anchor points in combination with the first position region in the embodiment of the present disclosure helps to reduce the computational power consumption while taking into account the computational accuracy.

In some embodiments, the method further includes:

determining an initial predicted coordinate of the vehicle key, and

determining the position coordinate of the vehicle key based on the respective distances between the plurality of target anchor points and the vehicle key and the predetermined position of each target anchor point on the vehicle, includes: iteratively determining the position coordinate of the vehicle key based on the initial predicted coordinate, the respective distances between the plurality of target anchor points and the vehicle key, and the predetermined position of each target anchor point on the vehicle.

In an embodiment of the present disclosure, the initial predicted coordinate may be a coordinate which is randomly set and located in an arbitrary region, or a coordinate which is randomly set and belongs to the first position region, or a coordinate determined by performing one or more fittings based on a data fitting method, which is not limited in the embodiments of the present disclosure.

The electronic device determines the initial predicted coordinate, and then iteratively determines the position coordinate of the vehicle key based on the initial predicted coordinate, the respective distances between the plurality of target anchor points and the vehicle key, and the predetermined position of each target anchor point on the vehicle. The iterative optimization method may be Newton method, Gaussian Newton iteration, gradient descent method, or the like.

It may be understood that in the embodiment of the present disclosure, a more accurate position coordinate of the vehicle key may be obtained by determining the initial predicted coordinate followed by iterative optimization.

In some embodiments, determining the initial predicted coordinate of the vehicle key includes:

determining, in response to a number of the plurality of anchor points being greater than a second predetermined number threshold, the initial predicted coordinate of the vehicle key based on the respective distances between the plurality of anchor points and the vehicle key and the predetermined position of each anchor point on the vehicle by using a fitting method; and

determining, in response to the number of the plurality of anchor points being less than or equal to the second predetermined number threshold, the initial predicted coordinate of the vehicle key based on respective distances between two adjacent second anchor points and the vehicle key, a predetermined distance between the two adjacent second anchor points, and the first position region.

In an embodiment of the present disclosure, the electronic device compares the second predetermined number threshold with the observed number of the plurality of anchor points, and determines the initial predicted coordinate using a different method based on the comparison result. The second predetermined number threshold may be the same as or different from the aforementioned first predetermined number threshold, but the second predetermined number threshold is a value that is less than the total number of anchor points on the vehicle. The second predetermined number threshold is not limited in the embodiments of the present disclosure.

In an embodiment of the present disclosure, the electronic device determines the initial predicted coordinate based on the information of the plurality of anchor points by using the fitting method when the observed number of the plurality of anchor points is greater than the second predetermined number threshold, i.e., when the number of anchor points is large, for example, the fitting method may be least-squares fitting or polynomial fitting or a combination of a plurality of fitting methods. The electronic device determines the initial predicted coordinate based on two adjacent second anchor points and the first position region, when the number of the plurality of anchor points is not large. The two adjacent second anchor points may be the same as or different from the above two adjacent first anchor points, which is not limited in the embodiments of the present disclosure.

In the followings, referring to the aforementioned FIG. 2, by taking that the second predetermined number threshold is 2 and the number of the plurality of anchor points is 2 as an example, and assuming that m1, m2, m3, and m4 are the measured distance values of the anchor point A, the anchor point B, the anchor point C, and the anchor point D, respectively, and that (x1,y1), (x1,y2), (x2,y2), and (x2,y1) are the coordinate values of the anchor point A, the anchor point B, the anchor point C, and the anchor point D, respectively, based on the different two adjacent second anchor points, the relationship between the initial predicted coordinate and the two adjacent second anchor points is as follows.

Assuming that the two adjacent second anchor points are the anchor point A and the anchor point B, and the first position region is region 1, the initial predicted coordinate may be: x=x1+min(m1, m2); y=m1-m2.

Assuming that the two adjacent anchor points are the anchor point B and the anchor point C, and the first position region is region 4, the initial predicted coordinate may be: x=m3-m2; y=y2+min(m2, m3).

Assuming that the two adjacent anchor points are the anchor point C and the anchor point D, and the first position region is region 6, the initial predicted coordinate may be: x=x2-min(m3, m4); y=m4-m3.

Assuming that the two adjacent anchor points are the anchor point A and the anchor point D, and the first position region is region 8, the initial predicted coordinate may be: x=m4-m1; y=y1-min(m4, m1).

When the first position region is the region 2, 3, 5, or 7, the initial predicted coordinate may be roughly estimated based on the selected two adjacent second anchor points with reference to the above manner.

It is to be understood that in the embodiment of the present disclosure, the electronic device determines the initial predicted coordinate based on the number of the plurality of anchor points in a targeted manner, which helps to reduce the computational power consumption while taking into account the initial predicted coordinate, and thus is conducive to improving the accuracy and efficiency of the calculation of the position coordinate of the vehicle key.

In some embodiments, determining, in response to the number of the plurality of anchor points being greater than the second predetermined number threshold, the initial predicted coordinate of the vehicle key based on the respective distances between the plurality of anchor points and the vehicle key and the predetermined position of each anchor point on the vehicle by using the fitting method, includes:

determining, in response to the number of the plurality of anchor points being greater than the second predetermined number threshold, a linear fitting coordinate of the vehicle key based on the respective distances between the plurality of anchor points and the vehicle key and the predetermined position of each anchor point on the vehicle by using a linear fitting method; and
determining the initial predicted coordinate of the vehicle key by performing non-linear iteration based on the linear fitting coordinate, the respective distances between the plurality of anchor points and the vehicle key, and the predetermined position of each anchor point on the vehicle.

In an embodiment of the present disclosure, in a case where the number of anchor points is large, the electronic device first uses the observed information of the plurality of anchor points to perform a linear fitting once to obtain the linear fitting coordinate, and then performs a non-linear iteration twice based on the linear fitting coordinate in conjunction with the information of the plurality of anchor points to obtain the initial predicted coordinate of the vehicle key. It is to be noted that in an embodiment of the present disclosure, after the initial predicted coordinate is determined, the position coordinate of the vehicle key may also be determined based on the same non-linear iteration method by using the initial predicted coordinate as the initial value.

For example, in an embodiment of the present disclosure, assuming that the observation data of i anchor points are obtained, the following linear observation equation may be established:

$$\begin{cases} \left(x_{01}-x_1\right)^2+\left(y_{01}-y_1\right)^2=m_1^2-\left(z_1-z_0\right)^2 \\ \left(x_{01}-x_2\right)^2+\left(y_{01}-y_2\right)^2=m_2^2-\left(z_2-z_0\right)^2 \\ \left(x_{01}-x_3\right)^2+\left(y_{01}-y_3\right)^2=m_3^2-\left(z_3-z_0\right)^2 \\ \left(x_{01}-x_i\right)^2+\left(y_{01}-y_i\right)^2=m_i^2-\left(z_i-z_0\right)^2 \end{cases} \quad (1)$$

where $m_i$ is the measured distance value of the $i^{th}$ anchor point, $(x_{01}, y_{01})$ is the linear fitting coordinate to be solved, $(x_i, y_i)$ is the coordinate value of the $i^{th}$ anchor point, $z_i$ represents the height of the $i^{th}$ anchor point from the ground, and $z_0$ represents the predetermined height of the vehicle key.

Based on the above observation equation, since all the anchor points have the same measured mounting height, i.e., the values of $z_1$ to $z_i$ are the same, when a subtraction operation is performed on any two of the above, the following formula (2) may be obtained based on a matrix method:

$$AX_{01}=b \quad X_{01}=\left(x_{01},y_{01}\right)^T \quad (2)$$

where:

$$A=\begin{bmatrix} 2(x_1-x_i) & 2(y_1-y_i) \\ 2(x_2-x_i) & 2(y_2-y_i) \\ 2(x_3-x_i) & 2(y_3-y_i) \end{bmatrix}, \quad b=\begin{bmatrix} x_1^2-x_i^2+y_1^2-y_i^2+m_i^2-m_1^2 \\ x_2^2-x_i^2+y_2^2-y_i^2+m_i^2-m_2^2 \\ x_3^2-x_i^2+y_3^2-y_i^2+m_i^2-m_3^2 \end{bmatrix}$$

The above matrix is solved using the least-squares method, which may be expressed as the following formula (3):

$$X_{01}=\left(A^T A\right)^{-1} A^T b \quad (3)$$

Based on the matrix representation of A and b corresponding to the above formula (2), $X_{01}$ may be solved based on the above formula (3), i.e., the linear fitting coordinate is obtained.

In an embodiment of the present disclosure, the initial predicted coordinate of the vehicle key is determined by performing non-linear fitting on the basis of linear least-squares fitting further in conjunction with Gaussian Newton iteration method. The basic idea of the Gaussian Newton iteration method is that when the observation equation is a non-linear equation, the observation equation is Taylor expanded at the initial point, the first-order term is retained, and the higher-order term is discarded. According to the least-squares principle of minimizing the sum of squared errors, each iteration converges toward a local optimum.

In an embodiment of the present disclosure, the following non-linear observation equation (4) may be established:

$$r_i=\sqrt{\left(x_{01}-x_i\right)^2+\left(y_{01}-y_i\right)^2} \quad (4)$$

where $(x_{01}, y_{01})$ is the to-be-solved coordinate after the non-linear iteration, i.e., the initial predicted coordinate of the vehicle key, $(x_i, yi)$ is the coordinate value of the $i^{th}$ anchor point, and $r_i$ the measured distance value of the $i^{th}$ anchor point, and the formula represents the geometrical relationship between the measured distance value and positions of the vehicle key and the anchor point.

When the above formula is Taylor expanded, it obtains:

$$r\left(X_0+\Delta\right)=r\left(X_0\right)+J_r\Delta \quad (5)$$

where the initial value $X_0$ is the above linear fitting coordinate $X_{01}$.

In the above formula, $J_r\Delta$ is the first order derivative of the original observation equation, and $\Delta$ is an updated quantity of the coordinate value, which is according to the least-squares theorem:

$$\Delta = -\left(J_r^T J_r\right)^{-1} J_r^T \left(r(i) - r(X_0)\right) \qquad (6)$$

The coordinate value after each iteration is a sum of the result of the previous iteration and the updated quantity, which may be expressed as:

$$X_k = X_{k-1} + \Delta \qquad (7)$$

In an embodiment of the present disclosure, the iteration terminating condition may be set to be that the number of iterations is greater than 10 or the updated quantity of the coordinate value is less than 0.01.

It is to be understood that in an embodiment of the present disclosure, in a case where the number of observed anchor points is large, the initial predicted coordinate of the vehicle key is determined by means of linear fitting and non-linear iteration, which can improve the prediction accuracy of the initial predicted coordinate, thereby improving the accuracy of the position coordinate of the vehicle key ultimately obtained.

In some embodiments, determining the initial predicted coordinate of the vehicle key by performing the non-linear iteration based on the linear fitting coordinate, the respective distances between the plurality of anchor points and the vehicle key, and the predetermined position of each anchor point on the vehicle, includes:

in response to a predetermined first convergence condition being satisfied when performing the non-linear iteration based on the linear fitting coordinate, the respective distances between the plurality of anchor points and the vehicle key, and the predetermined position of each anchor point on the vehicle, using a coordinate when the first convergence condition is satisfied as the initial predicted coordinate of the vehicle key; and

in response to the first convergence condition being not satisfied when performing the non-linear iteration based on the linear fitting coordinate, the respective distances between the plurality of anchor points and the vehicle key, and the predetermined position of each anchor point on the vehicle, using the linear fitting coordinate as the initial predicted coordinate of the vehicle key.

In an embodiment of the present disclosure, the electronic device further determines the initial predicted coordinate based on the convergence situation of the non-linear iteration. The first convergence condition may be that the above updated quantity of the coordinate value within 10 times is less than 0.01. In an embodiment of the present disclosure, in a case where the iteration is convergent, the coordinate when the first convergence condition is satisfied is used as the initial predicted coordinate of the vehicle key; and in a case where the iteration is not convergent, the initial linear fitting coordinate is used as the initial predicted coordinate of the vehicle key.

It is to be understood that in an embodiment of the present disclosure, the initial predicted coordinate is determined targetedly based on the convergence situation of the non-linear iteration, and in a case where the non-linear iteration is not convergent, the initial linear fitting coordinate is adopted, which, in comparison with the way of adopting the coordinate that may not satisfy the first convergence condition in the process of the non-linear fitting, can improve the accuracy of the initial predicted coordinate, thereby improving the accuracy of the position coordinate of the vehicle key obtained ultimately.

In some embodiments, iteratively determining the position coordinate of the vehicle key based on the initial predicted coordinate, the respective distances between the plurality of target anchor points and the vehicle key, and the predetermined position of each target anchor point on the vehicle, includes:

in response to the number of the plurality of anchor points being greater than the second predetermined number threshold, and a predetermined second convergence condition being satisfied when iteratively determining the position coordinate of the vehicle key based on the initial predicted coordinate, the respective distances between the plurality of target anchor points and the vehicle key, and the predetermined position of each target anchor point on the vehicle, using a position coordinate when the second convergence condition is satisfied as the position coordinate of the vehicle key; and

in response to the number of the plurality of anchor points being greater than the second predetermined number threshold, and the second convergence condition being not satisfied when iteratively determining the position coordinate of the vehicle key based on the initial predicted coordinate, the respective distances between the plurality of target anchor points and the vehicle key, and the predetermined position of each target anchor point on the vehicle, iteratively determining the position coordinate of the vehicle key based on a predetermined distance between two anchor points of the plurality of target anchor points and respective distances between the two anchor points and the vehicle key, wherein the respective distances between the two anchor points and the vehicle key are less than a first predetermined distance threshold.

In an embodiment of the present disclosure, when iteratively determining the position coordinate of the vehicle key after determining the initial predicted coordinate, in the case where the number of anchor points is large, the electronic device may perform a targeted process further in conjunction with the convergence situation during the iteration of the target anchor. For example, in the case where the second convergence condition is satisfied, the position coordinate when the second convergence condition is satisfied may be used as the position coordinate of the vehicle key; and in the case where the second convergence condition is not satisfied, it continues to perform iteration again based on the information of the two anchor points of the plurality of target anchor points with the measured distance less than the first predetermined distance threshold to determine the position coordinate of the vehicle key. The second convergence condition may be the same as the above first convergence condition, and of course, may also be different from the above first convergence condition, which is not limited in the embodiments of the present disclosure.

It is to be noted that in an embodiment of the present disclosure, theoretically, the two anchor points among the plurality of target anchor points whose distances from the vehicle key are less than the first predetermined distance threshold may be two adjacent anchor points. For example, the two anchor points may also be two anchor points with the shortest measured distance among the target anchor points.

It is to be understood that in an embodiment of the present disclosure, when iteratively determining the position coordinate of the vehicle key based on the plurality of target anchor points, it may process targetedly based on the convergence situation of the iteration, and in a case where the iteration is not convergent, two anchor points with a small distance are again selected from the target anchor points for iteration, which is conducive to improving the accuracy of the position coordinate of the vehicle key ultimately obtained.

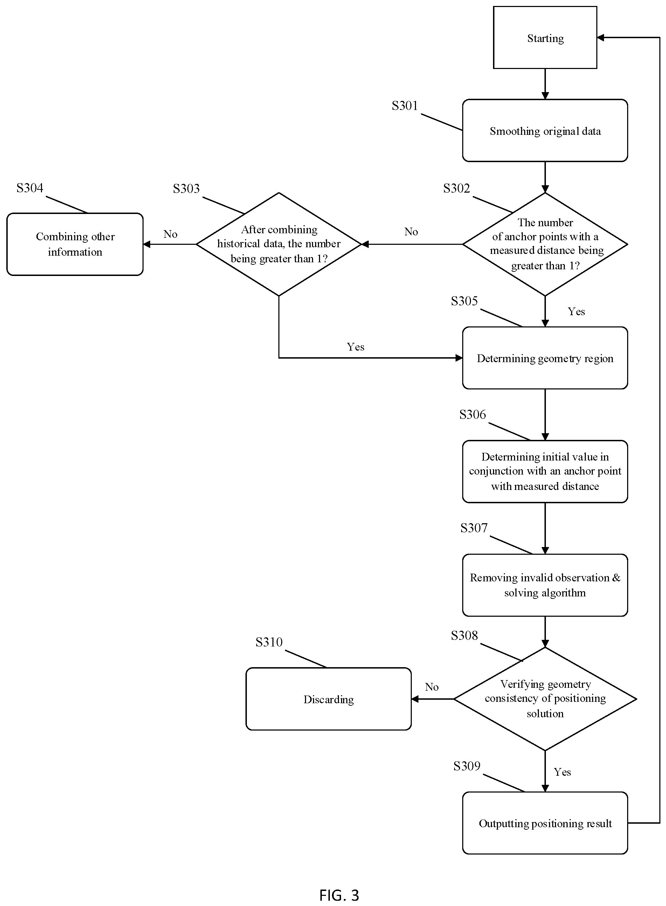

FIG. 3 is a flowchart of a method for positioning a vehicle key in an embodiment of the present disclosure. As shown in FIG. 3, the method includes the following steps S301 to S310.

In S301, original data is smoothed.

In an embodiment of the present disclosure, the original data is the observation data of the vehicle, and the data is smoothed to remove some possible abnormal data, such as the above data with the distance obviously too large or too small.

In S302, it determines whether the number N of anchor points with measured distances is greater than 1. If yes, it performs step S305; and if not, it performs step S303.

In an embodiment of the present disclosure, it determines whether the number N of anchor points with measured distances is greater than 1, i.e., it determines whether information of a plurality of anchor points is obtained. If the number of the anchor points is greater than 1, it may continue the method for positioning a vehicle key, and if the number of the anchor points is not greater than 1, it may supplement the information regarding the anchor point.

In S303, it determines whether the number is greater than 1 after combining the historical data. If yes, it performs step S305; and if not, it performs step S304.

In S304, it combines other information.

In an embodiment of the present disclosure, when the number of anchor points is less than 2, the electronic device may incorporate observation data within an adjacent historical time period to obtain the distances between the plurality of anchor points and the vehicle key. And if the number of anchor points is still less than 2 after incorporating the historical data, the electronic device may obtain the respective distances between the plurality of anchor points and the vehicle key based on a combination of a plurality of communication manners.

In S305, it determines a geometry region.

In an embodiment of the present disclosure, it determines the geometry region, i.e., it determines the first position region of the vehicle key relative to the vehicle. For example, it determines based the shape of the triangle formed by the respective distances between the two adjacent anchor points with the shortest measured distances and the vehicle key and the distance between the two adjacent anchor points with the shortest measured distances as described above.

In S306, it determines an initial value in conjunction with an anchor point with a measured distance.

In an embodiment of the present disclosure, it determines the initial value in conjunction with the anchor point with the measured distance, i.e., it determines the initial predicted coordinate based on the plurality of anchor points or the two adjacent second anchor points in the embodiment of the present disclosure.

In S307, it removes invalid observation and solves algorithm.

In an embodiment of the present disclosure, it removes the invalid observation, i.e., in the case where the number of the plurality of anchor points is greater than the first predetermined number threshold, it determines the anchor point among the plurality of anchor points within the first position region to be the target anchor point, and determines the position coordinate of the vehicle key based on the target anchor point. It is to be noted that in an embodiment of the present disclosure, in the case where the number of the plurality of anchor points is less than or equal to the first predetermined number threshold, for example, when the number of the plurality of anchor points is 2, the anchor points are not removed.

In S308, it verifies geometry consistency of positioning solution. If it is consistent, it performs step S309, and if it is inconsistent, it performs step S310.

In an embodiment of the present disclosure, it verifies the geometry consistency of the positioning solution, i.e., it determines the second position region of the vehicle key relative to the vehicle based on the estimated position coordinate of the vehicle key relative to the vehicle, and then determines whether the second position region is consistent with the first position region by comparing them.

In S309, it outputs a positioning result.

In an embodiment of the present disclosure, in the case where the second position region is consistent with the first position region, the position coordinate of the vehicle key relative to the vehicle is used as the position coordinate of the vehicle key.

In S310, it discards.

In an embodiment of the present disclosure, if the second position region is inconsistent with the first position region, it means that the positioning result is not credible.

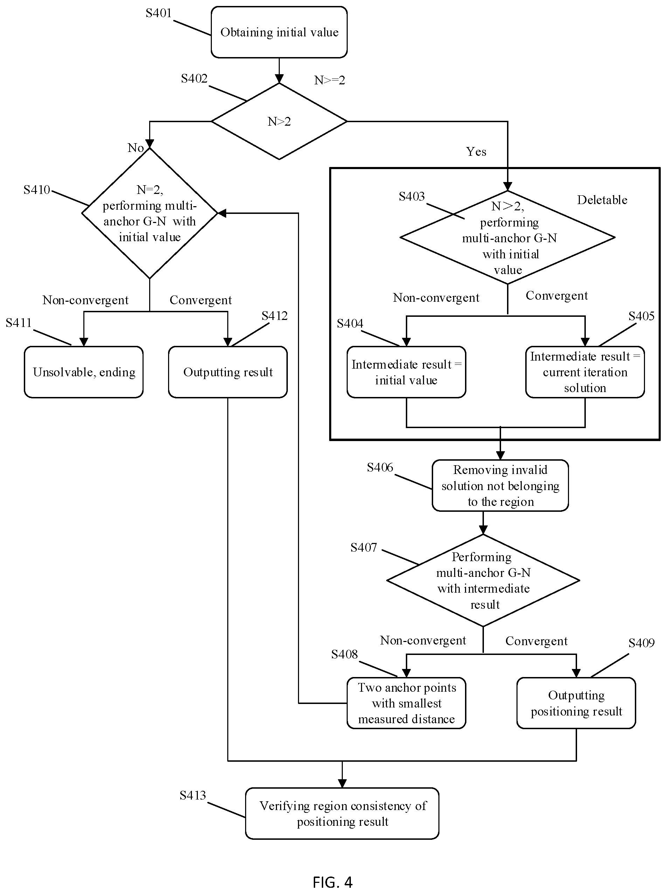

FIG. 4 is a flowchart of a process for estimating a position coordinate of a vehicle key relative to a vehicle in an embodiment of the present disclosure. As shown in FIG. 4, the process includes the following steps S401 to S413.

In S401, it obtains an initial value.

In an embodiment of the present disclosure, it obtains the initial value, i.e., it determines the initial predicted coordinate of the vehicle key. When the number of the plurality of anchor points is less than or equal to the first predetermined number threshold (e.g., 2), the initial value is the initial predicted coordinate of the vehicle key determined based on the respective distances between the two adjacent second anchor points and the vehicle key, the predetermined distance between the two adjacent second anchor points and the first position region. If the number of the plurality of anchor points is greater than the first predetermined number threshold, the initial value may be the linear fitting coordinate of the vehicle key determined by using a linear fitting method based on the respective distances between the plurality of anchor points and the vehicle key and the predetermined position of each anchor point on the vehicle as described in the embodiment of the present disclosure.

In S402, it determines whether N is greater than 2. If yes, it performs step S403, and if N=2, it performs step S410.

In an embodiment of the present disclosure, it determines whether N is greater than 2, i.e., it determines whether the number of the plurality of anchor points is greater than the first predetermined number threshold, and here the first predetermined number threshold is 2.

In S403, N>2, it performs multi-anchor G-N with the initial value. If it is not convergent, it performs step S404, and if it is convergent, it performs step S405.

In an embodiment of the present disclosure, it performs the multi-anchor G-N algorithm with the initial value, i.e., when the number of the plurality of anchor points is greater than the second predetermined number threshold, the initial predicted coordinate of the vehicle key is determined by performing the non-linear iteration based on the linear fitting coordinate, the respective distances between the plurality of anchor points and the vehicle key and the predetermined position of each anchor point on the vehicle. At this time, the second predetermined number threshold is also 2, and the non-linear iteration is a Gaussian-Newton iteration method.

In S404, intermediate result = initial value.

In an embodiment of the present disclosure, the multi-anchor G-N is not convergent, i.e., the first convergence condition is not satisfied, then the linear fitting coordinate is used as the initial predicted coordinate of the vehicle key, and the intermediate result herein actually characterizes the initial predicted coordinate in the embodiment of the present disclosure, and the initial value corresponds to the linear fitting coordinate when the number of the plurality of anchor points is greater than the first predetermined number threshold as described above.

In S405, intermediate result = current iteration solution.

In an embodiment of the present disclosure, the multi-anchor G-N is convergent, i.e., the first convergence condition is satisfied, then the coordinate when the first convergence condition is satisfied is used as the initial predicted coordinate of the vehicle key, and the intermediate result herein actually characterizes the initial predicted coordinate in the embodiment of the present disclosure, and the current iteration solution is the coordinate when the first convergence condition is satisfied.

The purpose of steps S403-S405 in the embodiment of the present disclosure is to more accurately predict the initial predicted coordinate, so as to enable a better result to be obtained in the subsequent step S407. It is to be noted that the steps S403-S405 are non-essential, and in the case of insufficient computational power, the linear fitting coordinate of step S401 may also be used directly as the initial predicted coordinate of S407.

In S406, it removes invalid solution not belonging to the region.

In an embodiment of the present disclosure, it removes the invalid solution not belonging to the region, i.e., in response to the number of the plurality of anchor points being greater than the first predetermined number threshold, the anchor point among the plurality of anchor points within the first position region is determined as the target anchor point, and then the position coordinate of the vehicle key is determined based on the target anchor point.

In S407, it performs multi-anchor G-N with intermediate result. If it is not convergent, it performs step S408, and if it is convergent, it performs step S409.

In an embodiment of the present disclosure, it performs the multi-anchor G-N with the intermediate result, i.e.,

according to the intermediate result (i.e., the initial predicted coordinate) of S405 and S406, it again determines the position coordinate of the vehicle key by using a Gaussian Newton iteration method based on the respective distances between the plurality of target anchor points and the vehicle key and the predetermined position of each target anchor point on the vehicle.

In S408, it obtains two anchor points with smallest measured distance, and performs step 410.

In an embodiment of the present disclosure, the multi-anchor G-N with intermediate result is not convergent, i.e., the second convergence condition is not satisfied, then the subsequent step is performed based on the two anchor points of the plurality of target anchor points with the distances from the vehicle key less than the first predetermined distance threshold.

In S409, it outputs positioning result, and performs step S413.

In an embodiment of the present disclosure, if the multi-anchor G-N with intermediate result is convergent, i.e., the second convergence condition is satisfied, the position coordinate when the second convergence condition is satisfied is output to step S413.

In S410, N=2, it performs multi-anchor G-N with initial value. If it is not convergent, it performs step S411, and if it is convergent, it performs step S412.

In an embodiment of the present disclosure, N=2, it performs multi-anchor G-N with initial value, i.e., it iteratively determines the position coordinate of the vehicle key based on the initial predicted coordinate, the respective distances between the plurality of target anchor points and the vehicle key and the predetermined position of each target anchor point on the vehicle. The iteration method is a Gaussian-Newton method, and the initial predicted coordinate is determined based on the respective distances between the two adjacent second anchor points and the vehicle key, the predetermined distance between the two adjacent second anchor points, and the first position region.

In S411, it is unsolvable, and ends.

In an embodiment of the present disclosure, if the multi-anchor G-N with the initial value is not convergent when N=2, it means that the positioning result is not credible.

In S412, it outputs the result, and performs step S413.

In an embodiment of the present disclosure, if the multi-anchor G-N with the initial value is convergent when N=2, the position coordinate when the convergence condition is satisfied is output to step S413.

In S413, it verifies region consistency of positioning result.

In an embodiment of the present disclosure, the verifying of the region consistency of the positioning result corresponds to the above steps S308-S310.

It is to be understood that in the embodiment of the present disclosure, the initial predicted coordinate is determined with respect to the number of anchor points, and in the case where the number of anchor points is large, a more accurate initial predicted coordinate is determined by combining a plurality of methods, a plurality of anchor points are filtered based on the first position region of the vehicle key relative to the vehicle, and the accuracy of the position coordinate is verified, by which way, the accuracy of the position coordinate of the vehicle key may be determined in an improved manner.

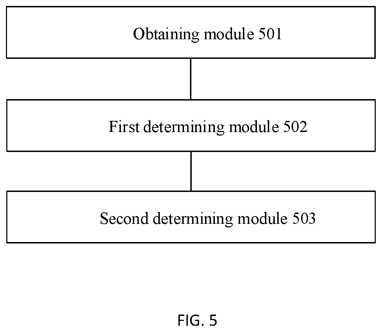

FIG. 5 is a diagram of a device for positioning a vehicle key according to an embodiment. As shown in FIG. 5, the device mainly includes:

an obtaining module 501, configured to obtain observation data of a vehicle, wherein the observation data includes observed respective distances between a plurality of anchor points on the vehicle and the vehicle key;

a first determining module 502, configured to determine a first position region of the vehicle key relative to the vehicle based on respective distances between two adjacent first anchor points of the plurality of anchor points and the vehicle key, and a predetermined distance between the two adjacent first anchor points; and

a second determining module 503, configured to determine a position coordinate of the vehicle key based on the first position region, the respective distances between the plurality of anchor points and the vehicle key, and a predetermined position of each anchor point on the vehicle.

In some embodiments, the second determining module 503 is further configured to:

estimate a position coordinate of the vehicle key relative to the vehicle based on the respective distances between the plurality of anchor points and the vehicle key, and the predetermined position of each anchor point on the vehicle;

determine a second position region of the vehicle key relative to the vehicle based on the estimated position coordinate of the vehicle key relative to the vehicle; and

determine the estimated position coordinate of the vehicle key relative to the vehicle as the position coordinate of the vehicle key in response to the second position region coinciding with the first position region.

In some embodiments, the second determining module 503 is further configured to:

determine a plurality of target anchor points for calculating the position coordinate based on a number of the plurality of anchor points and the first position region; and

determine the position coordinate of the vehicle key based on respective distances between the plurality of target anchor points and the vehicle key, and a predetermined position of each target anchor point on the vehicle.

In some embodiments, the second determining module 503 is further configured to:

determine, in response to the number of the plurality of anchor points being greater than a first predetermined number threshold, an anchor point of the plurality of anchor points that is located within the first position region as the target anchor point; and

determine, in response to the number of the plurality of anchor points being less than or equal to the first predetermined number threshold, the plurality of anchor points as the plurality of target anchor points.

In some embodiments, the device further includes:

a third determining module configured to determine an initial predicted coordinate of the vehicle key, and the second determining module 503 is further configured to:

iteratively determine the position coordinate of the vehicle key based on the initial predicted coordinate, the respective distances between the plurality of target anchor points and the vehicle key, and the predetermined position of each target anchor point on the vehicle.

In some embodiments, the third determining module is further configured to:

determine, in response to a number of the plurality of anchor points being greater than a second predetermined number threshold, the initial predicted coordinate of the vehicle key based on the respective distances between the plurality of anchor points and the vehicle key, and the predetermined position of each anchor point on the vehicle by using a fitting method;

determine, in response to the number of the plurality of anchor points being less than or equal to the second predetermined number threshold, the initial predicted coordinate of the vehicle key based on respective distances between two adjacent second anchor points and the vehicle key, a predetermined distance between the two adjacent second anchor points, and the first position region.

In some embodiments, the third determining module is further configured to:

determine, in response to the number of the plurality of anchor points being greater than the second predetermined number threshold, a linear fitting coordinate of the vehicle key based on the respective distances between the plurality of anchor points and the vehicle key, and the predetermined position of each anchor point on the vehicle by using a linear fitting method; and

determine the initial predicted coordinate of the vehicle key by performing non-linear iteration based on the linear fitting coordinate, the respective distances between the plurality of anchor points and the vehicle key, and the predetermined position of each anchor point on the vehicle.

In some embodiments, the third determining module is further configured to:

in response to a predetermined first convergence condition being satisfied when performing the non-linear iteration based on the linear fitting coordinate, the respective distances between the plurality of anchor points and the vehicle key, and the predetermined position of each anchor point on the vehicle, use a coordinate when the first convergence condition is satisfied as the initial predicted coordinate of the vehicle key; and

in response to the first convergence condition being not satisfied when performing the non-linear iteration based on the linear fitting coordinate, the respective distances between the plurality of anchor points and the vehicle key, and the predetermined position of each anchor point on the vehicle, use the linear fitting coordinate as the initial predicted coordinate of the vehicle key.

In some embodiments, the second determining module 503 is further configured to:

in response to the number of the plurality of anchor points being greater than the second predetermined number threshold, and a predetermined second convergence condition being satisfied when iteratively determining the position coordinate of the vehicle key based on the initial predicted coordinate, the respective distances between the plurality of target anchor points and the vehicle key, and the predetermined position of each target anchor point on the vehicle, use a position coordinate when the second convergence condition is satisfied as the position coordinate of the vehicle key; and

in response to the number of the plurality of anchor points being greater than the second predetermined number threshold, and the second convergence condition being not satisfied when iteratively determining the position coordinate of the vehicle key based on the initial predicted coordinate, the respective distances between the plurality of target anchor points and the vehicle key, and the predetermined position of each target anchor point on the vehicle, iteratively determine the position coordinate of the vehicle key based on a predetermined distance between two anchor points of the plurality of target anchor points and respective distances between the two anchor points and the vehicle key, wherein the respective distances between the two anchor points and the vehicle key are less than a first predetermined distance threshold.

In some embodiments, the two adjacent first anchor points are anchor points, that are adjacent in position and each has a distance from the vehicle key less than a second predetermined distance threshold, of the plurality of anchor points.

With respect to the device in the above embodiments, the specific manner in which each module performs the operation has been described in detail in the related method embodiment, which will not be illustrated in detail herein.

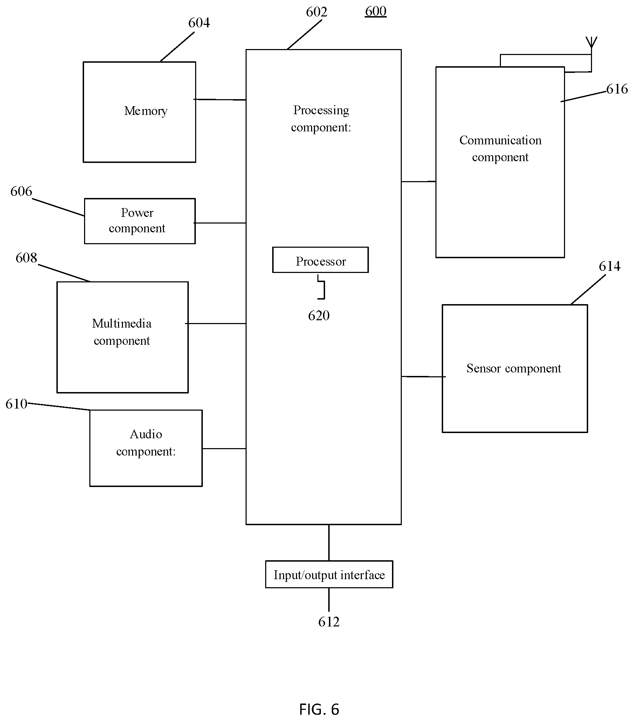

FIG. 6 is a block diagram of a structure of an electronic device in an embodiment of the present disclosure. For example, the device 600 (i.e., the electronic device) may be a mobile phone, a tablet device, a wearable device, or the like.

Referring to FIG. 6, the device 600 may include one or more of a processing component 602, a memory 604, a power component 606, a multimedia component 608, an audio component 610, an input/output (I/O) interface 612, a sensor component 614, and a communication component 616.

The processing component 602 generally controls the overall operations of the device 600, such as operations associated with at least one of display, telephone calls, data communications, camera operations, and recording operations. The processing component 602 may include one or more processors 620 to execute instructions to complete all or part of the steps of the foregoing method. In addition, the processing component 602 may include one or more modules to facilitate interaction between the processing component 602 and other components. For example, the processing component 602 may include a multimedia module to facilitate the interaction between the multimedia component 608 and the processing component 602.

The memory 604 is configured to store various types of data to support the operation at the device 600. Examples of these data include at least one of instructions for any application or method operating on the device 600, contact data, phone book data, messages, pictures, videos and the like. The memory 604 may be implemented by any type of volatile or non-volatile storage device or a combination thereof, such as static random access memory (SRAM), electrically erasable programmable read-only memory (EEPROM), erasable and programmable read-only memory (EPROM), programmable read-only memory (PROM), read-only memory (ROM), magnetic memory, flash memory, magnetic disk or optical disk.

The power component 606 provides power to various components of the device 600. The power component 606 may include at least one of a power management system, one or more power supplies, and other components associated with generating, managing, and distributing power for the device 600.

The multimedia component 608 includes a screen that provides an output interface between the device 600 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, sliding, and gestures on the touch panel. The touch sensor may not only sense the boundary of the touch or slide action, but also detect the duration and pressure related to the touch or slide operation. In some embodiments, the multimedia component 608 includes a front camera and/or a rear camera. When the device 600 is in an operation mode, such as a shooting mode or a video mode, the front camera and/or the rear camera can receive external multimedia data. Each of the front camera and rear camera may be a fixed optical lens system or have focal length and optical zoom capabilities.

The audio component 610 is configured to output and/or input audio signals. For example, the audio component 610 includes a microphone (MIC), and when the device 600 is in an operation mode, such as a call mode, a recording mode, and a voice recognition mode, the microphone is configured to receive an external audio signal. The received audio signal can be further stored in the memory 604 or sent via the communication component 616. In some embodiments, the audio component 610 further includes a speaker for outputting audio signals.

The I/O interface 612 provides an interface between the processing component 602 and a peripheral interface module. The above-mentioned peripheral interface module may be a keyboard, a click wheel, a button, and the like. These buttons may include but are not limited to home button, volume button, start button, and lock button.

The sensor component 614 includes one or more sensors for providing the device 600 with various aspects of state evaluation. For example, the sensor component 614 can detect the on/off status of the device 600 and the relative positioning of components. For example, the component is a display and keypad of the device 600. The sensor component 614 can also detect the position change of the device 600 or a component of the device 600, the presence or absence of contact between the user and the device 600, the orientation or acceleration/deceleration of the device 600, and the temperature change of the device 600. The sensor component 614 may include a proximity sensor configured to detect the presence of nearby objects when there is no physical contact. The sensor component 614 may also include a light sensor, such as a Complementary Metal Oxide Semiconductor (CMOS) or Charge Coupled Device (CCD) image sensor, for use in imaging applications. In some embodiments, the sensor component 614 may also include at least one of an acceleration sensor, a gyroscope sensor, a magnetic sensor, a pressure sensor, or a temperature sensor.

The communication component 616 is configured to facilitate wired or wireless communication between the device 600 and other devices. The device 600 can access a wireless network based on a communication standard, such as WiFi, 4G, or 5G, or a combination thereof. In an embodiment, the communication component 616 receives a broadcast signal or broadcast related information from an external broadcast management system via a broadcast channel. In an embodiment, the communication component 616 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an embodiment, the device 600 may be implemented by one or more of application specific integrated circuit (ASIC), digital signal processor (DSP), digital signal processing device (DSPD), programmable logic devices (PLD), field programmable gate array (FPGA), controller, microcontroller, microprocessor, or other electronic component.

An embodiment also provides a non-transitory computer-readable storage medium including instructions, such as the memory 604 including executable instructions and computer programs, and the instructions or computer programs may be executed by the processor 620 of the device 600 to complete the foregoing method. For example, the non-transitory computer-readable storage medium may be ROM, random access memory (RAM), Compact Disc Read-Only Memory (CD-ROM), magnetic tape, floppy disk, optical data storage device and the like.

A non-transitory computer-readable storage medium has instructions stored thereon that, when being executed by a processor of an electronic device, enables the electronic device to execute any method for positioning a vehicle key described in the embodiment of the present disclosure.

An embodiment of the present disclosure provides a computer program product including: computer programs or executable instructions stored in a computer-readable storage medium. A processor of a computer device reads the computer programs or executable instructions from the computer-readable storage medium, and the processor executes the computer programs or executable instructions such that the computer device performs any method for positioning a vehicle key described in the embodiment of the present disclosure.

A person skilled in the art may easily conceive of other implementations of the present disclosure upon consideration of the specification and practice of the invention disclosed herein. The present disclosure is intended to cover any variations, uses, or adaptations of the present disclosure that follow the general principle of the present disclosure and include the common knowledge or conventional technical means in the technical field not disclosed by the present disclosure. The specification and embodiments are to be regarded as exemplary only, with the true scope and spirit of the present disclosure being indicated by the following claims.

It is to be understood that the present disclosure is not limited to the precise structures described above and illustrated in the accompanying drawings, and that various modifications and changes may be made without departing from the scope thereof. The scope of the present disclosure is limited only by the appended claims.

**Claims**

1.   A method for positioning a vehicle key, comprising:

   obtaining (S11) observation data of a vehicle, wherein the observation data comprises observed respective distances between a plurality of anchor points on the vehicle and the vehicle key;
   determining (S12) a first position region of the vehicle key relative to the vehicle based on respective distances between two adjacent first anchor points of the plurality of anchor points and the vehicle key, and a predetermined distance between the two adjacent first anchor points; and
   determining (S13) a position coordinate of the vehicle key based on the first position region, the respective distances between the plurality of anchor points and the vehicle key, and a predetermined position of each anchor point on the vehicle.

2.   **The** method according to claim 1, wherein determining (S13) the position coordinate of the vehicle key based on the first position region, the respective distances between the plurality of anchor points and the vehicle key, and the predetermined position of each anchor point on the vehicle, comprises:

estimating a position coordinate of the vehicle key relative to the vehicle based on the respective distances between the plurality of anchor points and the vehicle key, and the predetermined position of each anchor point on the vehicle;

determining a second position region of the vehicle key relative to the vehicle based on the estimated position coordinate of the vehicle key relative to the vehicle; and

determining the estimated position coordinate of the vehicle key relative to the vehicle as the position coordinate of the vehicle key in response to the second position region coinciding with the first position region.

3. **The** method according to claim 1 or 2, wherein determining (S13) the position coordinate of the vehicle key based on the first position region, the respective distances between the plurality of anchor points and the vehicle key, and the predetermined position of each anchor point on the vehicle, comprises:

determining a plurality of target anchor points for calculating the position coordinate based on a number of the plurality of anchor points and the first position region; and

determining the position coordinate of the vehicle key based on respective distances between the plurality of target anchor points and the vehicle key, and a predetermined position of each target anchor point on the vehicle.

4. **The** method according to claim 3, wherein determining the plurality of target anchor points for calculating the position coordinate based on the number of the plurality of anchor points and the first position region, comprises:

determining, in response to the number of the plurality of anchor points being greater than a first predetermined number threshold, an anchor point of the plurality of anchor points that is located within the first position region as one of plurality of target anchor points; and

determining, in response to the number of the plurality of anchor points being less than or equal to the first predetermined number threshold, the plurality of anchor points as the plurality of target anchor points.

5. **The** method according to claim 3 or 4, further comprising:

determining an initial predicted coordinate of the vehicle key, and

determining the position coordinate of the vehicle key based on the respective distances between the plurality of target anchor points and the vehicle key, and the predetermined position of each target anchor point on the vehicle, comprises:

iteratively determining the position coordinate of the vehicle key based on the initial predicted coordinate, the respective distances between the plurality of target anchor points and the vehicle key, and the predetermined position of each target anchor point on the vehicle.

6. **The** method according to claim 5, wherein determining the initial predicted coordinate of the vehicle key comprises:

determining, in response to a number of the plurality of anchor points being greater than a second predetermined number threshold, the initial predicted coordinate of the vehicle key based on the respective distances between the plurality of anchor points and the vehicle key, and the predetermined position of each anchor point on the vehicle by using a fitting method; and

determining, in response to the number of the plurality of anchor points being less than or equal to the second predetermined number threshold, the initial predicted coordinate of the vehicle key based on respective distances between two adjacent second anchor points and the vehicle key, a predetermined distance between the two adjacent second anchor points, and the first position region.

7. **The** method according to claim 6, wherein determining, in response to the number of the plurality of anchor points being greater than the second predetermined number threshold, the initial predicted coordinate of the vehicle key based on the respective distances between the plurality of anchor points and the vehicle key, and the predetermined position of each anchor point on the vehicle by using the fitting method, comprises:

determining, in response to the number of the plurality of anchor points being greater than the second predetermined number threshold, a linear fitting coordinate of the vehicle key based on the respective distances between the plurality of anchor points and the vehicle key, and the predetermined position of each anchor point on the vehicle by using a linear fitting method; and

determining the initial predicted coordinate of the vehicle key by performing non-linear iteration based on the linear fitting coordinate, the respective distances between the plurality of anchor points and the vehicle key, and the predetermined position of each anchor point on the vehicle.

8. **The** method according to claim 7, wherein determining the initial predicted coordinate of the vehicle key by performing the non-linear iteration based on the linear fitting coordinate, the respective distances between the plurality of anchor points and the vehicle key, and the predetermined position of each anchor point on the vehicle, comprises:

in response to a predetermined first convergence condition being satisfied when performing the non-linear iteration based on the linear fitting coordinate, the respective distances between the plurality of anchor points and the vehicle key, and the predetermined position of each anchor point on the vehicle, using a coordinate when the first convergence condition is satisfied as the initial predicted coordinate of the vehicle key; and
in response to the first convergence condition being not satisfied when performing the non-linear iteration based on the linear fitting coordinate, the respective distances between the plurality of anchor points and the vehicle key, and the predetermined position of each anchor point on the vehicle, using the linear fitting coordinate as the initial predicted coordinate of the vehicle key.

9. **The** method according to any one of claims 6 to 8, wherein iteratively determining the position coordinate of the vehicle key based on the initial predicted coordinate, the respective distances between the plurality of target anchor points and the vehicle key, and the predetermined position of each target anchor point on the vehicle, comprises:

in response to the number of the plurality of anchor points being greater than the second predetermined number threshold, and a predetermined second convergence condition being satisfied when iteratively determining the position coordinate of the vehicle key based on the initial predicted coordinate, the respective distances between the plurality of target anchor points and the vehicle key, and the predetermined position of each target anchor point on the vehicle, using a position coordinate when the second convergence condition is satisfied as the position coordinate of the vehicle key; and
in response to the number of the plurality of anchor points being greater than the second predetermined number threshold, and the second convergence condition being not satisfied when iteratively determining the position coordinate of the vehicle key based on the initial predicted coordinate, the respective distances between the plurality of target anchor points and the vehicle key, and the predetermined position of each target anchor point on the vehicle, iteratively determining the position coordinate of the vehicle key based on a predetermined distance between two anchor points of the plurality of target anchor points and respective distances between the two anchor points and the vehicle key, wherein the respective distances between the two anchor points and the vehicle key are less than a first predetermined distance threshold.

10. **The** method according to any one of claims 1 to 9, wherein the two adjacent first anchor points are anchor points, that are adjacent in position and each has a distance from the vehicle key less than a second predetermined distance threshold, of the plurality of anchor points.

11. A device for positioning a vehicle key, comprising:

an obtaining module (501), configured to obtain observation data of a vehicle, wherein the observation data comprises observed respective distances between a plurality of anchor points on the vehicle and the vehicle key;
a first determining module (502), configured to determining a first position region of the vehicle key relative to the vehicle based on respective distances between two adjacent first anchor points of the plurality of anchor points and the vehicle key, and a predetermined distance between the two adjacent first anchor points; and
a second determining module (503), configured to determine a position coordinate of the vehicle key based on the first position region, the respective distances between the plurality of anchor points and the vehicle key, and a predetermined position of each anchor point on the vehicle.

12. **The** device according to claim 11, wherein the second determining module (502) is further configured to:

estimate a position coordinate of the vehicle key relative to the vehicle based on the respective distances between the plurality of anchor points and the vehicle key, and the predetermined position of each anchor point on the vehicle;
determine a second position region of the vehicle key relative to the vehicle based on the estimated position coordinate of the vehicle key relative to the vehicle; and
determine the estimated position coordinate of the vehicle key relative to the vehicle as the position coordinate of the vehicle key in response to the second position region coinciding with the first position region.

13. **The** device according to claim 11 or 12, wherein the second determining module (502) is further configured to:

   determine a plurality of target anchor points for calculating the position coordinate based on a number of the plurality of anchor points and the first position region; and
   determine the position coordinate of the vehicle key based on respective distances between the plurality of target anchor points and the vehicle key, and a predetermined position of each target anchor point on the vehicle.

14. A non-transitory computer-readable storage medium having a computer program or instruction stored thereon that, when being executed by a processor, implements the method according to any one of claims 1 to 10.

15. A computer program product comprising a computer program or instruction that, when being executed by a processor, implements the method according to any one of claims 1 to 10.

S11

Obtaining observation data of a vehicle, the observation data including observed respective distances between a plurality of anchor points on the vehicle and the vehicle key

S12

Determining a first position region of the vehicle key relative to the vehicle based on respective distances between two adjacent first anchor points of the plurality of anchor points and the vehicle key, and a predetermined distance between the two adjacent first anchor points

S13

Determining a position coordinate of the vehicle key based on the first position region, the respective distances between the plurality of anchor points and the vehicle key, and a predetermined position of each anchor point on the vehicle

FIG. 1

FIG. 2

S301 — Smoothing original data

S302 — The number of anchor points with a measured distance being greater than 1?

S303 — After combining historical data, the number being greater than 1?

S304 — Combining other information

S305 — Determining geometry region

S306 — Determining initial value in conjunction with an anchor point with measured distance

S307 — Removing invalid observation & solving algorithm

S308 — Verifying geometry consistency of positioning solution

S309 — Outputting positioning result

S310 — Discarding

Starting

FIG. 3

FIG. 4

Obtaining module 501

First determining module 502

Second determining module 503

FIG. 5

600

604

602

Memory

Processing
component:

606

Power
component

Processor

620

608

Multimedia
component

610

Audio
component:

Communication
component

616

Sensor component

614

Input/output interface

612

FIG. 6

Europäisches
Patentamt

European
Patent Office

Office européen
des brevets

# EUROPEAN SEARCH REPORT

**Application Number**

EP 25 17 6618

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 115 438 A (NANJING TACKING AUTOMOBILE ELECTRONIC CO LTD) 13 July 2021 (2021-07-13) * the whole document * ----- | 1-5, 10-15 | INV. G01S5/00 G01S5/02 G01S5/14 |
| X | CN 115 032 587 A (WATCHDATA SYSTEM CO LTD) 9 September 2022 (2022-09-09) * the whole document * ----- | 1-5, 10-15 | |

TECHNICAL FIELDS
SEARCHED (IPC)

G01S

The present search report has been drawn up for all claims

| Place of search | Date of completion of the search | Examiner |
|---|---|---|
| Munich | 16 October 2025 | Krummenacker, Benoît |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt
European
Patent Office
Office européen
des brevets

**Application Number**

EP 25 17 6618

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-5, 10-15

☐ The present supplementary European search report has been drawn up for those parts of the European patent application which relate to the invention first mentioned in the claims (Rule 164 (1) EPC).

| | |
|---|---|
| Europäisches Patentamt<br>European Patent Office<br>Office européen des brevets | **LACK OF UNITY OF INVENTION**<br>**SHEET B** |

**Application Number**

**EP 25 17 6618**

The Search Division considers that the present European patent application does not comply with the requirements of unity of invention and relates to several inventions or groups of inventions, namely:

      1. claims: 1-5, 10-15

          Accurately determining a position coordinate of a vehicle
          key by selecting optimal vehicle anchors
               ---

      2. claims: 6-9

          Determining an initial predicted position of a vehicle key
          to iteratively determine a position of the vehicle key
               ---

## ANNEX TO THE EUROPEAN SEARCH REPORT
## ON EUROPEAN PATENT APPLICATION NO.

EP 25 17 6618

This annex lists the patent family members relating to the patent documents cited in  the above-mentioned European search report.
The members are as contained in the European Patent Office EDP file on
The European Patent Office is in no way liable for these particulars which are merely given for the purpose of information.

16-10-2025

| Patent document cited in search report | Publication date | Patent family member(s) | Publication date |
|---|---|---|---|
| CN 113115438 A | 13-07-2021 | NONE | |
| CN 115032587 A | 09-09-2022 | NONE | |

EPO FORM P0459

For more details about this annex : see Official Journal of the European Patent Office, No. 12/82